(19) Europäisches Patentamt
European Patent Office
Office européen des brevets

(11) **EP 2 982 027 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
*H02K 15/02* (2006.01)   *H02K 7/04* (2006.01)
*H02K 1/28* (2006.01)

(21) Anmeldenummer: **14714727.6**

(22) Anmeldetag: **03.04.2014**

(86) Internationale Anmeldenummer:
**PCT/EP2014/056659**

(87) Internationale Veröffentlichungsnummer:
**WO 2014/161921 (09.10.2014 Gazette 2014/41)**

(54) **VERFAHREN ZUR HERSTELLUNG EINES ROTORS UND ROTOR**

METHOD FOR PRODUCING A ROTOR AND ROTOR

PROCÉDÉ POUR LA RÉALISATION D'UN ROTOR ET ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2013 DE 102013206045**

(43) Veröffentlichungstag der Anmeldung:
**10.02.2016 Patentblatt 2016/06**

(73) Patentinhaber: **KSB Aktiengesellschaft
67227 Frankenthal (DE)**

(72) Erfinder:
• **SCHAAB, Jochen
67227 Frankenthal (DE)**
• **HAUSMANN, Meike
67227 Frankenthal (DE)**
• **KANOFFSKY, Florian
67227 Frankenthal (DE)**
• **MÜLLER, Martin
67227 Frankenthal (DE)**
• **MUNTZ, Timo
67227 Frankenthal (DE)**

(56) Entgegenhaltungen:
**EP-A1- 2 325 980      DE-A1- 3 435 508
JP-A- S57 208 840      LU-A1- 57 590**

**Beschreibung**

Die Erfindung betrifft ein Verfahren zur Befestigung eines Rotors auf einer Maschinenwelle einer elektrischen Maschine, insbesondere einer Reluktanz- oder Synchronreluktanzmaschine. Zudem betrifft die Erfindung einen Rotor für eine elektrische Maschine, insbesondere für eine Reluktanz- oder Synchronreluktanzmaschine, der durch das gattungsgemäße Verfahren auf einer Maschinenwelle befestigbar ist.

Rotoren für elektrische Maschinen, insbesondere für Reluktanzmaschinen, werden oftmals aus einem Rotorblechpaket aufgebaut, das aus einzelnen in axialer Richtung des Rotors gestapelter Bleche besteht. Zur Durchführung der Maschinenwelle weist das Rotorblechpaket eine axial verlaufende Wellenbohrung auf. Die Welle wird durch diese Bohrung in axialer Richtung durchgeführt und zur Momentübertragung mit dem Rotorblechpaket kraftschlüssig verpresst.

Eine mögliche Verpressung kann durch Aufschrumpfen erfolgen. Hierbei wird das Rotorpaket erwärmt, wodurch sich dieses ausdehnt und sich folglich der Umfang der Wellenbohrung erweitert. Im erwärmten Zustand wird das Blechpaket einfach auf die Welle aufgeschoben. Die nachfolgende Abkühlung bewirkt eine Materialschrumpfung, wodurch sich aufgrund der Materialausdehnung eine kraftschlüssige Verbindung zwischen Rotor und Maschinenwelle einstellt. Die Temperaturschwankungen bedeuten jedoch eine enorme Materialbelastung für das Blechpaket.

Die WO 2011/061409 A1 beschreibt einen alternativen Weg zur Verpressung des Rotorpaketes auf der Maschinenwelle. Die technische Lehre dieser Druckschrift beruht darauf, den Durchmesser der Wellenbohrungen einzelner Blechpakete zu modifizieren. Selbiges wird auf die Ausführung etwaiger Positionslöcher angewandt. Noch vor dem Stapeln des Blechpaketes auf der Rotorwelle werden einzelne Bleche zueinander verdreht, insbesondere um 90, 180 sowie 270°, so dass der Durchmesserverlauf der Wellenbohrung in axialer Richtung variiert. Das nachfolgende Aufpressen der modifizierten Wellenbohrung auf die Welle bewirkt eine formschlüssige Verbindung. Die JP 57208840 und LU 57590 beschreiben auch alternative Methoden zur Schränkung des Rotors und zur Verpressung des Rotorpaketes auf der Maschinenwelle. Eine derartige Rotorkonstruktion lässt jedoch keine Rotorschränkung zu. Zudem ist das gegenseitige Verdrehen der einzelnen Bleche vor der kraftschlüssigen Verbindung mit der Rotorwelle aufwendig und führt zu einer Erhöhung der Produktionskosten.

Die Aufgabe der vorliegenden Erfindung besteht daher darin, ein gattungsähnliches Befestigungsverfahren weiterzuentwickeln, das die vorangehende Problematik zu überwinden weiss. Eine weitere Zielsetzung der Erfindung besteht im Aufzeigen einer möglichen Rotorkonstruktion, die eine einfachere und verbesserte Befestigung auf einer Maschinenwelle erlaubt und zudem die Möglichkeit einer Rotorschränkung bietet.

Diese Aufgabe wird durch ein Verfahren gemäß den Merkmalen des Anspruchs 1 gelöst. Vorteilhafte Ausführungsformen des Verfahrens sind Gegenstand der sich an den Hauptanspruch anschließenden abhängigen Unteransprüche.

Gemäß Anspruch 1 wird ein Verfahren zur Befestigung eines Rotors auf der Maschinenwelle einer elektrischen Maschine, insbesondere einer Reluktanzmaschine, vorgeschlagen. Erfindungsgemäß werden einzelne Rotorbleche, insbesondere kongruente Rotorbleche, auf der Maschinenwelle zu einem Blechpaket gestapelt. Vorzugsweise werden die einzelnen Bleche deckungsgleich aufeinander gestapelt. Im Anschluss wird das gestapelte Blechpaket tordiert, wodurch sich eine kraftschlüssige Verpressung zwischen Rotorpaket und Maschinenwelle einstellt.

Die einzelnen Bleche des Rotorpaketes müssen daher nicht notwendigerweise vor der Stapelung zueinander verdreht werden. Vielmehr werden diese zunächst deckungsgleich in axialer Richtung auf der Maschinenwelle gestapelt. Erst die Tordierung des Blechpaketes bewirkt eine kraftschlüssige Verbindung mit der Welle.

In einer besonders vorteilhaften Ausführung der Erfindung werden wenigstens zwei Positionierstäbe quer zu den Blechen durch das Rotorpaket geführt. Für die Durchführung sind entsprechende Positionierbohrungen in den Blechen vorgesehen. Die Tordierung des Blechpaketes wird nun über ein Verdrehen der Positionierstäbe erreicht. Diese verlaufen sodann schräg zur axialen Rotorachse, wodurch eine Schränkung des Rotorpaketes erzielt wird. Die Schränkung des Rotorpaketes optimiert zum Einen die Drehmomentwelligkeit des Rotors und reduziert merklich die entstehenden Rotorlaufgeräusche.

Vorteilhafterweise werden auf den aussen liegenden Stirnseiten des Rotorpaketes vor der Tordierung Klemmringe angebracht, insbesondere jeweils ein Klemmring pro Stirnseite. Die Klemmringe dienen zur Sicherung und Stabilisierung des Rotorpaketes in axialer Rotorrichtung.

Idealerweise werden die wenigstens zwei Positionierstäbe an wenigstens einem der stirnseitig angebrachten Klemmringe fixiert, vorzugsweise mit diesem verschraubt. Sinnvollerweise werden die wenigstens zwei Positionierstäbe endseitig an wenigstens einem Klemmring fixiert, besonders bevorzugt werden die wenigstens zwei Positionierstäbe beidseitig an den jeweiligen Klemmringen fixiert bzw. mit diesen verschraubt. Hierdurch wird nicht nur eine Schränkung des Rotorpaketes, sondern zudem eine axiale Fixierung des Rotorpaketes erreicht.

Sinnvollerweise wird die Verpressung bzw. Torsion erst gelöst, nachdem die Positionierstäbe ordnungsgemäß mit ihren jeweiligen Klemmringen verschraubt sind. Dadurch wird sichergestellt, dass der Rotor in seiner tordierten Verfassung bestehen bleibt.

Vorzugsweise sind die Klemmringe an die Geometrie des an den Stirnseiten des Rotors befindlichen Blechpaketes angepasst. Insbesondere sind diese nahezu umfangsgleich.

Die exzentrische Anordnung der Positionierbohrungen in Bezug auf die Wellenbohrung des Rotorpaketes kann zu einer Unwucht während der Rotationsbewegung des Rotors führen. Zur Verringerung möglicher Unwuchten werden zweckmäßig ein oder mehrere Wuchtungsbohrungen im Blechpaket vorgesehen. Hierdurch lässt sich die Gewichts- bzw. Schwerpunktverteilung gezielt justieren um einen runden Rotorlauf zu gewährleisten. Alternativ oder zusätzlich können ein oder mehrere Wuchtungsgewichte am Rotor angeordnet werden. Bestenfalls werden ein oder mehrere Wuchtungsgewichte an einem oder mehreren der verwendeten Klemmringe befestigt.

Die Erfindung betrifft des Weiteren einen Rotor für eine elektrische Maschine, insbesondere für eine Reluktanz- oder Synchronreluktanzmaschine, der mittels des erfindungsgemäßen Verfahrens an einer Maschinenwelle befestigbar ist. Der Rotor besteht aus einem Rotorpaket, das aus einzelnen Blechen zusammengesetzt ist. Für die Aufnahme der Maschinenwelle sorgt eine durch das Blechpaket durchgehende Wellenbohrung. Zudem sind mehrere Positionierbohrungen vorgesehen, durch die in axialer Richtung Positionierstäbe zur Ausbildung einer Rotorschränkung geführt sind.

Für eine kraftschlüssige Verbindung zwischen Motorwelle und Rotor mittels Tordierung sind die Positionierbohrungen auf einer Kreislinie angeordnet. Diese Kreislinie verläuft exzentrisch versetzt zur Wellenbohrung. Anders gesagt sind die Positionierbohrungen bzw. Positionierstäbe punktsymmetrisch zueinander angeordnet, wobei das Symmetriezentrum exzentrisch zum Mittelpunkt der Wellenbohrung angeordnet ist.

Bei der Tordierung verpressen die durchgeführten Positionierstäbe den Rotor aufgrund der exzentrisch versetzten Anordnung über ihre Seitenflächen. Die Wellenbohrung ist zweckmäßig derart versetzt, so dass sich durch die Tordierung des gesamten Rotorpaketes der Querschnitt der Wellenbohrung verringert. Die Bleche werden folglich auf der Welle verpresst angeordnet, wodurch ein ausreichender Kraftschluss zwischen Maschinenwelle und Rotorpaket für die Drehmomentübertragung entsteht. Demnach ist kein Pressdurchmesser der Wellenbohrung durch Verdrehen der einzelnen Bleche vor der Stapelung notwendig. Die Verpressung des Rotors auf der Maschinenwelle wird erst nach der Stapelung des Rotorpaketes durch Torsion des Rotorpaketes erreicht.

Eine optimale Verpressung des Rotorpaketes auf der Maschinenwelle wird erreicht, wenn wenigstens vier Bohrungen für Positionierstäbe vorgesehen sind, wobei in jedem Rotorquadrant wenigstens eine Bohrung bzw. ein Positionierstab vorgesehen ist.

Denkbar ist es auch, dass die einzelnen Bohrungen bzw. Positionierstäbe symmetrisch zueinander angeordnet sind, insbesondere punkt- oder achssymmetrisch zueinander angeordnet sind.

Vorzugsweise ist die Wellenbohrung kreisförmig.

Ein oder mehrere Bohrungen für die Positionierstäbe sind idealerweise oval ausgeformt, wohingegen ein oder mehrere einsetzbare Positionierstäbe eine runde Querschnittsfläche, d.h. rohrförmig ausgeführt sind. Aufgrund der ovalen Lochform ein oder mehrerer Bohrungen lassen sich ein oder mehrere Positionierstäbe während der Tordierung des Rotorpaketes gegenüber der Rotorachse neigen. Es entsteht eine Rotorschränkung.

Die konkrete geometrische Ausgestaltung der einzelnen Bohrungen wird zweckmäßigerweise in Abhängigkeit des Torsionswinkels des jeweiligen Rotorbleches gewählt. Je größer der Torsionswinkel, d.h. der Drehwinkel eines einzelnen Blechs um die Rotorachse gewählt wird, desto größer muss die ovale Ausprägung der jeweiligen Lochform der Positionierbohrungen gewählt sein.

Aufgrund der exzentrischen Anordnung der Positionierstäbe zur Wellenbohrung wird während der Tordierung des Rotorpaketes eine Verpressung des Rotorpaketes auf der Maschinenwelle erreicht. Insbesondere verpressen die Stäbe den Rotor über ihre Seitenflächen.

Eine exzentrische Anordnung der Wellenbohrung kann auf unterschiedliche Art und Weise realisiert sein. Zum Einen besteht die Möglichkeit einer koaxialen Anordnung der Wellenbohrung zur Rotordrehachse, d. h. zum Rotorumfang. In diesem Fall verläuft der durch die Positionierbohrungen gebildete Kreis um einen bestimmten Betrag versetzt zur Rotorachse, d.h. zur Wellenbohrung. Das Symmetriezentrum der Positionierbohrungen ist versetzt zum Mittelpunkt der Wellenbohrung angeordnet.

Alternativ besteht die Möglichkeit, dass die Positionierbohrungen derart angeordnet sind, so dass der gebildete Kreis koaxial zum Rotorumfang bzw. zur Rotorachse verläuft. Die Positionierbohrungen sind folglich symmetrisch zum Rotorumfang positioniert. Notwendigerweise durchsetzt die Wellenbohrung das Rotorpaket sodann exzentrisch zum Rotorumfang.

Unabhängig von der tatsächlichen Ausführung ist für den erfindungsgemäßen Rotor dabei wesentlich, dass die Wellenbohrung sowie der gebildete Kreis der Positionierbohrungen für die Positionierstäbe zueinander um einen gewissen Betrag exzentrisch versetzt auf den einzelnen Blechen verlaufen. Aufgrund der Exzentrizität bewirkt die Rotortordierung eine Änderung des Wellenbohrungsdurchmessers, wodurch eine ausreichende Verpressung des Rotorpaketes auf der Maschinenwelle erzielt wird. Diese Verpressung wird maßgeblich durch die Positionierstäbe, die gleichzeitig eine optimale Schränkung des Rotorpaketes ermöglichen, bewirkt.

Pro Stirnseite des gestapelten Blechpaketes kann vorzugsweise ein Klemmring angeordnet sein. Denkbar ist es, dass die Klemmringe mit dem oder den Positionierstäben verschraubt ist/sind.

Idealerweise weisen die einzelnen Klemmringe schräge Anlegeflächen für die Schraubmuttern zur Verschraubung der einzelnen Positionierstäbe auf. Die schräge Anlegefläche ist vorzugsweise an die Schränkung des Rotors angepasst, d.h. an die maximale Neigung der Positionierstäbe gegenüber der Rotorachse.

Aufgrund der Exzentrizität der Wellenbohrung sind ein oder mehrere Wuchtungsbohrungen innerhalb einzelner Bleche bzw. im Blechpaket vorgesehen, die eine Auswuchtung des Rotors und damit einen runden Rotorlauf ermöglichen. Alternativ oder zusätzlich können die ein oder mehreren vorgesehenen Klemmringe entsprechende Wuchtungsgewichte aufweisen, die zur Auswuchtung des Rotors an definierten Stellen auf den Klemmringen plaziert sind.

Die vorliegende Erfindung betrifft des Weiteren eine elektrische Maschine, insbesondere eine Reluktanz- oder Synchronreluktanzmaschine, mit einem Rotor gemäß der vorliegenden Erfindung. Die elektrische Maschine weist dabei offensichtlich dieselben Vorteile und Eigenschaften wie der erfindungsgemäße Rotor auf, weshalb an dieser Stelle auf eine wiederholende Beschreibung verzichtet werden soll.

Weitere Vorteile und Eigenschaften der Erfindung sollen im Folgenden anhand von zwei in den Zeichnungen dargestellten Ausführungsbeispielen näher erläutert werden. Es zeigen:

Figur 1: eine schematische Darstellung eines einzelnen Blechs für ein Rotorpaket gemäß einer ersten Ausführungsform der vorliegenden Erfindung,

Figur 2: eine schematische Darstellung eines weiteren Blechs gemäß einer alternativen Ausführungsform,

Figur 3: einen Klemmring für das erfindungsgemäße Rotorpaket und

Figur 4: eine skizzierte Darstellung zur Berechnung der ausnutbaren Fläche.

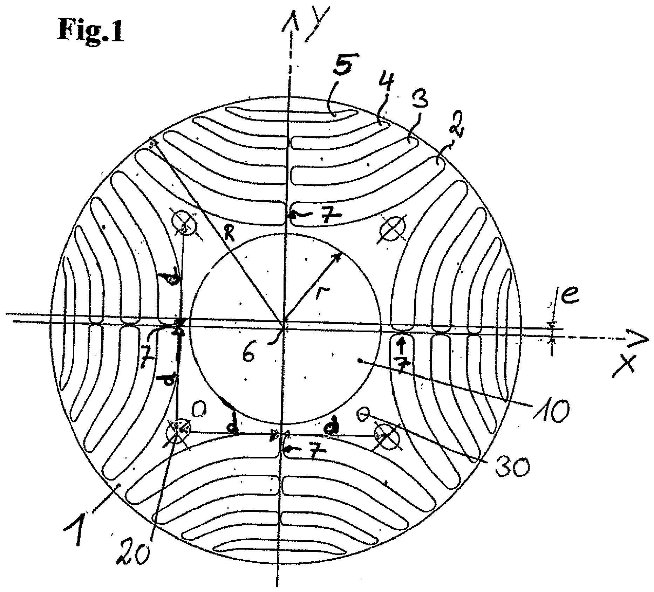

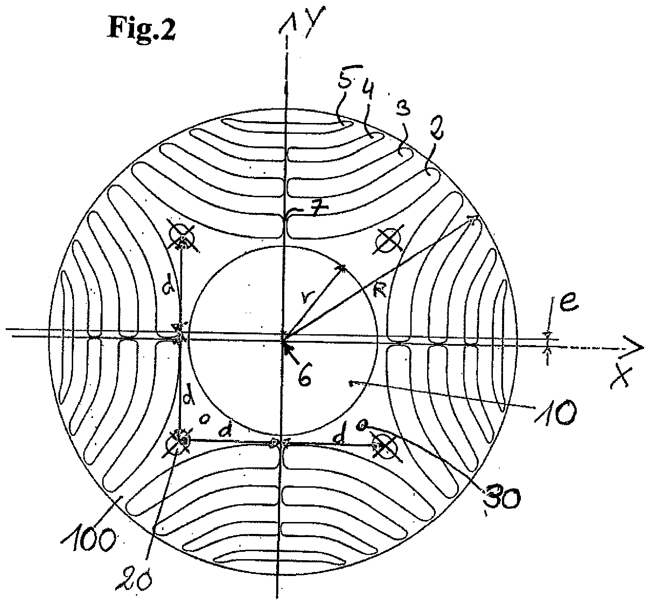

Die Figuren 1 und 2 zeigen eine Draufsicht auf unterschiedliche Rotorbleche 1, die für den Aufbau eines erfindungsgemäßen Rotors in axialer Richtung, d.h. entlang der Rotorachse 6 aufeinander gestapelt werden. Zur Vereinfachung der Darstellung ist der Stator nicht abgebildet. Das Rotorblech 1 verfügt über mehrere Aussparungen 2, 3, 4 und 5, die die Funktion von Flusssperren übernehmen und durch deren Anordnung ein vierpoliger Rotor gebildet wird, dessen magnetischer Fluss in den Bereichen mit den Flusssperren 2, 3, 4, 5 gehemmt ist. Allgemein wird der Bereich mit hoher magnetischer Leitfähigkeit als d-Achse und der Bereich geringer magnetischer Leitfähigkeit als q-Achse gekennzeichnet.

Das zusammengesetzte Blechpaket wird auf einer nicht dargestellten Rotorwelle montiert. Die Anordnung der einzelnen Flussperren 2, 3, 4, 5 entspricht im Wesentlichen der technischen Lehre der US-Patentschrift US 5,818,140, auf die in diesem Zusammenhang ausdrücklich Bezug genommen wird. Die Flusssperren 2, 3 und 4 umfassen jeweils einen Steg 7, der die jeweilige Flussperre mittig in zwei Einzelsegmente teilt. Die Anordnung des Stegs soll die Rotorstabilität erhöhen.

Das dargestellte kreisförmige Blech 1 mit Radius R weist eine ebenfalls kreisförmige Wellenbohrung 10 mit Radius r auf. Das gesamte Blech 1 lässt sich in vier gleich große Kreissegmente unterteilen, die den jeweiligen Quadranten des dargestellten X-Y-Koordinatensystems zugeordnet sind. Pro Kreissegment ist dabei jeweils eine ovale Bohrung 20 pro Positionierstab (nicht dargestellt) vorgesehen. Die rohrförmigen Positionierstäbe werden quer zur Blechfläche entlang der Rotorachse 6 durch die Bohrungen 20 geführt. Die einzelnen Bohrungen 20 sind punktsymmetrisch zueinander angeordnet, wobei der Abstand zwischen zwei Bohrungen 20 in X- als auch in Y-Achsrichtung 2d beträgt.

Der Ursprung des dargestellten X-Y-Koordinatensystems fällt auf die Rotorachse 6. Eine kraftschlüssige Verbindung zwischen der nicht dargestellten Maschinenwelle und dem aus einzelnen Blechen 1 gestapelten Blechpaket wird dank der exzentrischen Anordnung der Wellenbohrung 10 zu den Bohrungen 20 durch Torsion des gesamten Blechpaketes erreicht.

Im Ausführungsbeispiel der Figur 1 ist die Wellenbohrung 10 exzentrisch zum Rotorumfang 6, d.h. dem Mittelpunkt 6 des Rotors angeordnet. Die exzentrische Anordnung ergibt sich durch einen Versatz des Mittelpunktes der Wellenbohrung 10 um den Betrag e in positiver Y-Richtung vom Ursprung des Koordinatensystems, d.h. dem Mittelpunkt 6 des Rotorumfangs. Die Bohrungen 20 sind zueinander punktsymmetrisch, wobei das Symmetriezentrum auf den Mittelpunkt 6 des Rotorumfangs fällt. Anders gesagt liegen die Bohrungen 20 auf einer virtueller Kreislinie, die koaxial zu der Rotorachse 6 verläuft. Hierdurch ergibt sich der notwendige Versatz zwischen Bohrungen 20 und Wellenbohrung 10.

Nachdem die einzelnen Bleche 1 auf der Maschinenwelle einer Reluktanzmaschine gestapelt wurden und die Positionierstäbe in die entsprechenden Bohrungen 20 eingebracht sind, wird das gesamte Blechpaket tordiert. Aufgrund der ovalen Lochform der Bohrungen 20 verpressen die eingesetzten Positionierstäbe das Blechpaket über ihre Seitenflächen. Der exzentrische Versatz der Wellenbohrung 10 führt zur Verringerung des resultierenden Wellendurchmessers entlang der Rotationsachse des Blechpaketes, wodurch der Rotor während der Tordierung auf der Welle verpresst wird.

Es ist also keine Presspassung der Wellenbohrung 10 zur Welle bei einem Einzelblech vorhanden. Die Verpressung wird erst bei einem vollständig gestapelten Rotorpaket durch Torsion des Paketes in Verbindung mit der exzentrischen Anordnung von Wellenbohrung 10 und Positionierbohrungen 20 erreicht.

Zum Ausgleich der Exzentrizität werden im Rotorblech 1 Wuchtausgleichsbohrungen 30 vorgesehen. Wie es der Figur 1 zu entnehmen ist, sind die Wuchtausgleichsbohrungen 30 symmetrisch zur Y-Achse mit negativer Y-Koordinate angeordnet, da der Versatz der Wellenbohrung 10 in Richtung der positiven Y-Achse um den Betrag e auszugleichen ist.

Eine alternative Ausführungsform eines Bleches 100 ist der Figur 2 zu entnehmen. Bis auf die Anordnung der Wellenbohrung 10 sowie den Positionierbohrungen 20 entspricht das Blech 100 dem Beispiel aus Figur 1. Gemäß diesem Ausführungsbeispiel ist die Wellenbohrung 10 koaxial zur Rotorachse 6, d.h. dem Mittelpunkt des Rotorumfangs angeordnet. Die Exzentrizität der punktsymmetrisch angeordneten Bohrungen 20 gegenüber der Wellenbohrung 10 ergibt sich durch die um den Betrag e in X-Richtung versetzte virtuelle Kreislinie der Bohrungen 20 gegenüber der Rotorachse 6, d.h. das Symmetriezentrum fällt nicht mehr auf den Rotormittelpunkt. Die einzelnen Bohrungen 20 sind wieder im Abstand 2d zueinander angeordnet, nämlich symmetrisch zur Y-Achse als auch zu einer zur X-Achse parallelen und um den Betrag e zu dieser versetzten Achse.

Auch hier werden zum Ausgleich der Exzentrizität und einer damit verbundenen Unwucht des gestapelten Blechpaketes Wuchtausgleichsbohrungen 30 an den gleichen Stellen im Blech 1 vorgesehen.

Da die einzelnen Positionierstäbe bereits vor der Tordierung des Blechpaketes der Ausführungsbeispiele aus Figur 1 und 2 in die entsprechenden Bohrungen 20 eingesetzt werden, führt die Tordierung zu einer Neigung der eingesetzten Positionierstäbe gegenüber der Rotorachse 6. Hierdurch wird eine gewollte Schränkung des Rotorpaketes erreicht, die zum einen die Laufeigenschaften des Rotors sowie die Drehmomentwelligkeit optimiert. Für die durch die Tordierung hervorgerufene Neigung der einzelnen Positionierstäbe gegenüber der Mittelachse ist jedoch die ovale Lochform der Bohrungen 20 vorzusehen.

Der Einfluss der Rotorschränkung muss für die Dimensionierung der ausnutbaren Fläche zur Verpressung des Rotorpaketes Berücksichtigung finden. Durch Anwendung des Kosinussatzes kann dabei in Abhängigkeit des Torsionswinkels die ausnutbare Fläche zur Verpressung berechnet werden.

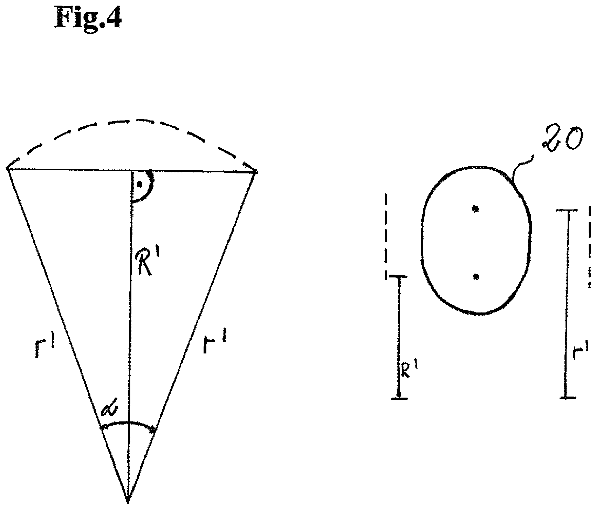

Figur 4 skizziert den mathematischen Ansatz, wobei der Winkel $\alpha$ variabel ist und dem Torsionswinkel des Rotorpaketes entspricht. Die Bezugszeichen r', R' kennzeichnen die Lage des Positionierstabes innerhalb der Bohrung 20, d.h. die Position an welcher der Positionierstab durch die Bohrung 20 hindurchtritt. Die Lage des Positionierstabes innerhalb der jeweiligen Bohrung 20 der einzelnen Bleche 1 ändert sich mit zunehmenden Torsionswinkel $\alpha$ und wandert von der Position r' in Richtung der Position R'.

Zur Bestimmung der ausnutbaren Fläche der Bohrungen 20 ist der Wert für R' in Abhängigkeit der Länge r' gesucht. Gemäß dem Kosinussatz ergibt sich gemäß der Gleichung

$$R' = \cos\left(\frac{\alpha}{2}\right) \bullet r'$$

beispielsweise bei einem Winkel $\alpha$ mit 10°

$$R' = 99{,}61946981\% \bullet r'$$

Die ausnutbare Fläche (gestrichelte Linie in Figur 4) wird folglich aus dem Differenzbetrag der Größen R', r' definiert.

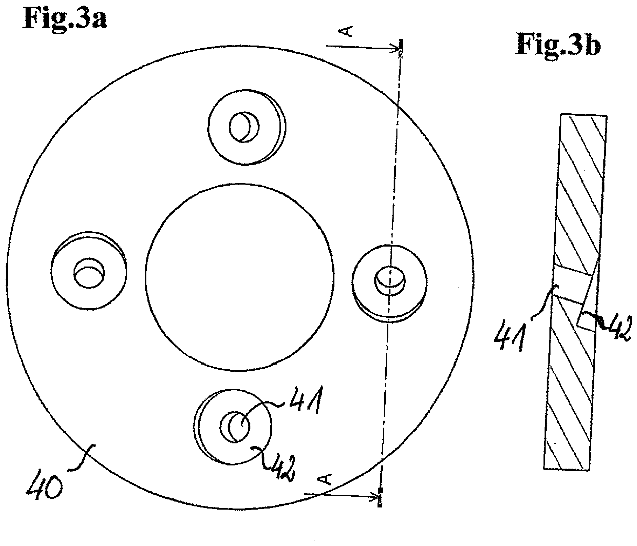

Das ganze Blechpaket wird über zwei Klemmringe gemäß der Figur 3a nach dem Stapeln auf der Maschinenwelle in Position gehalten. Die Klemmringe 40 werden dabei auf den jeweiligen Stirnseiten des Blechpaketes montiert. Zur Fixierung weist jeder Klemmring 40 insgesamt vier Bohrungen 41 zur Durchführung der Positionierstäbe des Rotorpaketes auf. Auf der Oberseite weisen die Bohrungen 41 schräge Anlegeflächen für Schraubmuttern zur Fixierung der einzelnen Positionierstäbe auf.

Figur 3b zeigt eine Querschnittsdarstellung entlang der Schnittachse A-A. Daraus ist ersichtlich, dass die Bohrungen 41 in Richtung der Oberfläche des Klemmrings erweitert sind und eine schräg verlaufende Anlegefläche zur Aufnahme einer Mutter umfasst. Die schräge Ausrichtung der Anlageflächen 42 ist an die Neigung der einzelnen Positionierstäbe für die Rotorschränkung angepasst.

Zusätzlich zur Klemmung kann der Ring 40 auch zur Wuchtung des Rotorpaketes genutzt werden. Hierbei sind Nuten (nicht dargestellt) für entsprechende Wuchtgewichte vorgesehen.

Für die Befestigung des Rotors auf einer Maschinenwelle werden zunächst sämtliche Rotorbleche 1, 100 auf der Maschinenwelle gestapelt und auf beiden Stirnseiten in axialer Richtung mit Klemmringen 40 abgedeckt. Im Anschluss werden die Positionierstäbe in die entsprechenden Bohrungen 20 eingebracht. Danach wird das Rotorpaket mit entsprechenden Mitteln verpresst und tordiert. Bevor die Verpressung und Torsion gelöst wird, werden die Positionierstäbe mit Schraubverbindungen an den Klemmringen 40 fixiert um das Paket in der tordierten Position zu sichern. Erst im Anschluss an die Verschraubung der Positionierstäbe mit den Muttern wird die Verpressung und Torsion gelöst.

**Patentansprüche**

1. Verfahren zur Befestigung eines Rotors auf der Maschinenwelle einer elektrischen Maschine, insbesondere einer Reluktanz- oder Synchronreluktanzmaschine, wobei einzelne Rotorbleche (1, 100) auf der Maschinenwelle zu einem Blechpaket gestapelt werden und im Anschluss das Blechpaket für eine formschlüssige Verpressung des Rotorpaketes auf der Maschinenwelle tordiert wird.

**2.** Verfahren nach Anspruch 1, **dadurch gekennzeichnet, dass** wenigstens zwei Positionierstäbe quer zu den Blechen (1, 100) durch das Rotorpaket geführt werden und durch die Tordierung des Blechpaketes eine Schränkung des Rotors erzielt wird.

**3.** Verfahren nach einem der vorhergehenden Ansprüche, **dadurch gekennzeichnet, dass** auf den Stirnseiten des Rotorpaketes vor der Tordierung Klemmringe (40) angebracht werden.

**4.** Verfahren nach einem der vorhergehenden Ansprüche, **dadurch gekennzeichnet, dass** ein oder mehrere Positionierstäbe an wenigstens einem der Klemmringe (40) fixiert, vorzugsweise mit diesen verschraubt wird/werden, insbesondere bevor die Verpressung bzw. Torsion gelöst wird.

**5.** Verfahren nach einem der vorhergehenden Ansprüche, **dadurch gekennzeichnet, dass** der Rotor durch ein oder mehrere Wuchtungsbohrungen (30) im Bleckpaket und/oder Wuchtungsgewichte an ein oder mehreren der Klemmringe (40) ausgewuchtet wird.

**6.** Rotor für eine elektrische Maschine, insbesondere für eine Reluktanz- oder Synchronreluktanzmaschine, zur Befestigung auf einer Maschinenwelle gemäß dem Verfahren eines der Ansprüche 1 bis 5, mit einem aus einzelnen Blechen (1, 100) zusammengesetzten Rotorpaket, wobei eine Wellenbohrung (10) zur Aufnahme der Maschinenwelle und mehrere durch Positionierbohrungen (20) in den Blechen (1, 100) verlaufende Positionierstäbe zur Rotorschränkung vorgesehen sind, **dadurch gekennzeichnet, dass** die Positionierstäbe bzw. Positionierbohrungen (20) auf einer Kreislinie angeordnet sind und diese Kreislinie zur Wellenbohrung (10) exzentrisch versetzt ist.

**7.** Rotor nach Anspruch 6, **dadurch gekennzeichnet, dass** wenigstens vier Bohrungen (20) für Positionierstäbe vorgesehen sind, wobei in jedem Rotorquadrant eine Bohrung (20) angeordnet ist.

**8.** Rotor nach einem der vorhergehenden Ansprüche, **dadurch gekennzeichnet, dass** wenigstens eine Bohrung (20) für einen Positionierstab oval ausgeformt ist, wobei die ovale Form ein oder mehrerer Bohrungen (20) in Abhängigkeit des Torsionswinkels $\alpha$ zur Verpressung des Rotors auf der Maschinenwelle gewählt ist.

**9.** Rotor nach einem der vorhergehenden Ansprüche, **dadurch gekennzeichnet, dass** die Wellenbohrung (10) koaxial zum Rotor bzw. Rotorumfang angeordnet ist.

**10.** Rotor nach einem der Ansprüche 6 bis 9, **dadurch gekennzeichnet, dass** die Wellenbohrung (10) exzentrisch versetzt zum Rotor bzw. Rotorumfang angeordnet ist und die Positionierbohrungen (20) vorzugsweise symmetrisch zum Außenumfang angeordnet sind.

**11.** Rotor nach einem der vorhergehenden Ansprüche, **dadurch gekennzeichnet, dass** pro Stirnseite des Blechpaketes ein Klemmring (40) angeordnet ist, wobei die Klemmringe (40) mit dem oder den Positionierstäben verbunden, insbesondere verschraubt, sind.

**12.** Rotor nach Anspruch 11, **dadurch gekennzeichnet, dass** der oder die Klemmringe (40) schräge Anlegeflächen (42) für die Muttern zur Verschraubung der Positionierstäbe aufweisen.

**13.** Rotor nach einem der vorhergehenden Ansprüche, **dadurch gekennzeichnet, dass** ein oder mehrere Bleche (1, 100) ein oder mehrere Wuchtungsbohrungen (30) zur Rotorauswuchtung und/oder ein oder mehrere Klemmringe (40) wenigstens eine Aufnahme zur Befestigung wenigstens eines Wuchtungsgewichtes aufweisen.

**14.** Elektrische Maschine, insbesondere Reluktanz- oder Synchronreluktanzmaschine, mit einem Rotor nach einem der Ansprüche 6 bis 13.

**Claims**

**1.** Method for mounting a rotor on the machine shaft of an electrical machine, in particular of a reluctance or synchronous reluctance machine, wherein individual rotor laminations (1, 100) are stacked on the machine shaft to form a laminated core and then the laminated core is twisted so as to press the rotor core on the machine shaft in an interlocking manner.

**2.** Method according to Claim 1, **characterized in that** at least two positioning rods are passed through the rotor core transverse to the laminations (1, 100) and offsetting of the rotor is achieved by twisting the laminated core.

**3.** Method according to either of the preceding claims, **characterized in that** clamping rings (40) are fitted on the end sides of the rotor core before twisting.

**4.** Method according to one of the preceding claims, **characterized in that** one or more positioning rods are fixed to at least one of the clamping rings (40), preferably is/are screwed to said clamping rings, in particular before the pressing or torsion is released.

5.  Method according to one of the preceding claims, **characterized in that** the rotor is balanced by one or more balancing bores (30) in the laminated core and/or balancing weights on one or more of the clamping rings (40).

6.  Rotor for an electrical machine, in particular for a reluctance or synchronous reluctance machine, to be mounted on a machine shaft according to the method of one of Claims 1 to 5, comprising a rotor core which is made up of individual laminations (1, 100), wherein a shaft bore (10) is provided for receiving the machine shaft and a plurality of positioning rods which run through positioning bores (20) in the laminations (1, 100) are provided for offsetting the rotor, **characterized in that** the positioning rods or positioning bores (20) are arranged on a circular line and this circular line is eccentrically offset in relation to the shaft bore (10).

7.  Rotor according to Claim 6, **characterized in that** at least four bores (20) for positioning rods are provided, wherein a bore (20) is arranged in each rotor quadrant.

8.  Rotor according to one of the preceding claims, **characterized in that** at least one bore (20) for a positioning rod is of oval shape, wherein the oval shape of one or more bores (20) is selected depending on the torsion angle α for pressing the rotor on the machine shaft.

9.  Rotor according to one of the preceding claims, **characterized in that** the shaft bore (10) is arranged coaxially in relation to the rotor or rotor circumference.

10. Rotor according to one of Claims 6 to 9, **characterized in that** the shaft bore (10) is arranged eccentrically offset in relation to the rotor or rotor circumference, and the positioning bores (20) are preferably arranged symmetrically in relation to the outer circumference.

11. Rotor according to one of the preceding claims, **characterized in that** one clamping ring (40) is provided for each end side of the laminated core, wherein the clamping rings (40) are connected, in particular screwed, to the positioning rod or the positioning rods.

12. Rotor according to Claim 11, **characterized in that** the clamping ring or the clamping rings (40) have inclined contact surfaces (42) for the nuts for screw-fitting the positioning rods.

13. Rotor according to one of the preceding claims, **characterized in that** one or more laminations (1, 100) have one or more balancing bores (30) for balancing the rotor and/or one or more clamping rings (40) have at least one receptacle for mounting at least one balancing weight.

14. Electrical machine, in particular reluctance or synchronous reluctance machine, comprising a rotor according to one of Claims 6 to 13.

**Revendications**

1.  Procédé pour la fixation d'un rotor sur l'arbre de machine d'une machine électrique, en particulier d'une machine à réluctance ou d'une machine synchrone à réluctance, dans lequel des tôles de rotor individuelles (1, 100) sont empilées sur l'arbre de machine pour former un paquet de tôles et ensuite le paquet de tôles est tordu pour réaliser un pressage par engagement par correspondance de formes du paquet de rotor sur l'arbre de machine.

2.  Procédé selon la revendication 1, **caractérisé en ce qu'**au moins deux barres de positionnement sont guidées transversalement aux tôles (1, 100) à travers le paquet de rotor, et un gauchissement du rotor est produit par la torsion du paquet de tôles.

3.  Procédé selon l'une quelconque des revendications précédentes, **caractérisé en ce que** des bagues de serrage (40) sont montées sur les côtés frontaux du paquet de rotors avant la torsion.

4.  Procédé selon l'une quelconque des revendications précédentes, **caractérisé en ce qu'**une ou plusieurs barres de positionnement sont fixées à au moins l'une des bagues de serrage (40), de préférence sont vissées à celles-ci, en particulier avant que le pressage ou la torsion soit relâché(e).

5.  Procédé selon l'une quelconque des revendications précédentes, **caractérisé en ce que** le rotor est équilibré par un ou plusieurs alésages d'équilibrage (30) dans le paquet de tôles et/ou par des poids d'équilibrage au niveau d'une ou plusieurs des bagues de serrage (40).

6.  Rotor pour une machine électrique, en particulier pour une machine à réluctance ou une machine synchrone à réluctance, pour la fixation sur un arbre de machine selon le procédé de l'une des revendications 1 à 5, comprenant un paquet de rotor constitué de tôles individuelles (1, 100), un alésage d'arbre (10) pour recevoir l'arbre de machine et plusieurs barres de positionnement s'étendant à travers les alésages de positionnement (20) dans les tôles (1, 100), pour le gauchissement du rotor, étant prévus, **caractérisé en ce que** les barres de positionnement ou les alésages de positionnement (20) sont disposés sur une ligne circulaire et cette ligne circulaire est décalée de manière excentrique par rapport à l'alésage d'arbre (10).

7. Rotor selon la revendication 6, **caractérisé en ce qu'**au moins quatre alésages (20) sont prévus pour les barres de positionnement, un alésage (20) étant disposé dans chaque quadrant du rotor.

8. Rotor selon l'une quelconque des revendications précédentes, **caractérisé en ce qu'**au moins un alésage (20) pour une barre de positionnement présente une forme ovale, la forme ovale d'un ou de plusieurs alésages (20) étant choisie en fonction de l'angle de torsion $\alpha$ pour le pressage du rotor sur l'arbre de machine.

9. Rotor selon l'une quelconque des revendications précédentes, **caractérisé en ce que** l'alésage d'arbre (10) est disposé coaxialement au rotor ou à la périphérie du rotor.

10. Rotor selon l'une quelconque des revendications 6 à 9, **caractérisé en ce que** l'alésage d'arbre (10) est disposé de manière décalée excentriquement par rapport au rotor ou à la périphérie du rotor et les alésages de positionnement (20) sont disposés de préférence symétriquement par rapport à la périphérie extérieure.

11. Rotor selon l'une quelconque des revendications précédentes, **caractérisé en ce que** pour chaque côté frontal du paquet de tôles, une bague de serrage (40) est prévue, les bagues de serrage (40) étant connectées, en particulier par vissage, à la ou aux barres de positionnement.

12. Rotor selon la revendication 11, **caractérisé en ce que** la ou les bagues de serrage (40) présentent des surfaces d'appui obliques (42) pour les écrous en vue du vissage des barres de positionnement.

13. Rotor selon l'une quelconque des revendications précédentes, **caractérisé en ce qu'**une ou plusieurs tôles (1, 100) présentent un ou plusieurs alésages d'équilibrage (30) pour l'équilibrage du rotor et/ou une ou plusieurs bagues de serrage (40) présentent au moins un logement pour la fixation d'au moins un poids d'équilibrage.

14. Machine électrique, en particulier machine à réluctance ou machine synchrone à réluctance comprenant un rotor selon l'une quelconque des revendications 6 à 13.

Fig.1

Fig.2

**Fig.3a**

**Fig.3b**

# Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011061409 A1
- JP 57208840 B
- LU 57590
- US 5818140 A